Europäisches Patentamt

(19) **European Patent Office**

Office européen des brevets

(11) Veröffentlichungsnummer: **0 045 903**
**B1**

(12) **EUROPÄISCHE PATENTSCHRIFT**

(45) Veröffentlichungstag der Patentschrift:
29.05.85

(21) Anmeldenummer: 81105987.2

(22) Anmeldetag: 30.07.81

(51) Int. Cl.⁴: **F 02 P 5/04**

(54) Zündanlage für Brennkraftmaschinen.

(30) Priorität: 09.08.80 DE 3030190

(43) Veröffentlichungstag der Anmeldung:
17.02.82 Patentblatt 82/7

(45) Bekanntmachung des Hinweises auf die Patenterteilung:
29.05.85 Patentblatt 85/22

(84) Benannte Vertragsstaaten:
DE FR GB IT.

(56) Entgegenhaltungen:
EP - A - 0 041 102
DE - A - 1 253 517
DE - A - 1 278 175
DE - A - 2 425 595
DE - A - 2 738 886
DE - A - 3 020 868
GB - A - 2 021 690
US - A - 3 593 693
US - A - 3 768 451
US - A - 4 140 092
US - A - 4 155 341
US - A - 4 168 691

(73) Patentinhaber: **BAYERISCHE MOTOREN WERKE
Aktiengesellschaft, Postfach 40 02 40 Petuelring 130,
D-8000 München 40 (DE)**

(72) Erfinder: **Krappel, Alfred. Ing. grad., Elisabethweg 2,
D-8045 Ismaning (DE)**
Erfinder: **Guggenmos, Johannes, Ing. grad., Helchenried
Fabrikstrasse 6, D-8949 Dirlewang (DE)**
Erfinder: **Holzmann, Josef, Knorrstrasse 29,
D-8000 München 40 (DE)**

(74) Vertreter: **Bullwein, Fritz, Bayerische Motoren Werke
Aktiengeselschaft Postfach 40 02 40 -
AJ-23 Petuelring 130, D-8000 München 40 (DE)**

BUNDESDRUCKEREI BERLIN

**Beschreibung**

Die Erfindung beschäftigt sich mit einer Zündanlage für Brennkraftmaschinen, die einen induktiven Geber für die Zündzeitpunktsteuerung des Primärstromkreises einer Zündspule besitzt und bei der die Phasenlage des Gebersignals und damit der Zündzeitpunkt durch eine Impedanz veränderbar ist. Hierzu ist es aus der EP-A 0 041 102 bekannt, die Impedanz als zusätzliche Belastung dem Geber bei Überschreiten eines ersten Drehzahlwerts der Maschine zuzuschalten und bei Unterschreiten des ersten Drehzahlwertes oder bei Überschreiten eines zweiten, höheren Drehzahlwertes abzuschalten und bei Unterschreiten des zweiten Drehzahlwertes zuzuschalten, wobei die beiden Drehzahlwerte durch die Klingelgrenze der Maschine bestimmt sind. Diese ältere, nicht vorveröffentlichte Patentanmeldung nimmt die Priorität der deutschen Patentanmeldung DE-A 3 020 868 in Anspruch und ist als Stand der Technik für die Länder DE, FR und GB zu berücksichtigen. Bei dieser Patentanmeldung hat die Impedanz einen unveränderten Wert, so daß die Zündverstellung nur sehr grob der Klingelgrenze der Maschine ausweicht.

Ferner ist aus der DE-A-2 619 443 bekannt, das Gebersignal eines induktiven Gebers für die Zündzeitpunktsteuerung des Primärstromkreises einer Zündspule durch eine Impedanz generell bei Drehzahlwerten über einem vorgesetzten einzigen Drehzahlwert zu belasten und damit z. B. eine Drehzahlbegrenzung der Brennkraftmaschine und einen Schutz gegen Überdrehen zu erreichen. Dabei wird nur ein einziger Parameter der Brennkraftmaschine berücksichtigt, bei dem es sich anstelle der Drehzahl auch um einen anderen Parameter handeln kann. Eine nähere Angabe über die Art dieses Parameters findet sich in dieser Druckschrift jedoch nicht.

Aus der GB-A-2 021 690 ergibt sich der Hinweis, eine Einbuchtung der Zündverstellkurve vorzunehmen. Hierzu wird ausgeführt, daß es mit einfachen mechanischen Mitteln praktisch jedoch unmöglich ist, eine derartige Einbuchtung vorzunehmen. Vielmehr wird die Verwendung eines Klopfdetektors beschrieben, der bei Auftreten eines Klopfens eine Abhilfemaßnahme in Form einer Spätverstellung des Zündzeitpunkts vornimmt.

Aus der Zeitschrift ATZ, Heft 12/79, Seite 626 ist es bereits bekannt bei vollelektronischen digitalen Zündanlagen die Zündverstellkurve einem über der Drehzahl der Maschine eintretenden Einbruch der Klingelgrenze anzupassen. Eine derartige Anlage ist jedoch teuer und aufwendig.

Weiter geht aus der DE-B 1 253 517 hervor, den Zündzeitpunkt für eine vorbestimmte Zeitdauer zu verändern. Hierzu wird das Ausgangssignal eines induktiven Gebers einem Multivibrator und dessen Ausgangssignal einem Zeitverzögerungsglied mit einem stets vorhandenen und lediglich in seinem Wert veränderlichen Widerstand zugeführt. Die Veränderung des Widerstands erfolgt dabei als Funktion einer Zustandsgröße der Brennkraftmaschine, beispielsweise der Zylinderfüllung oder der Maschinentemperatur.

Schließlich ist es aus der US-A 3 626 455 bekannt, mittels eines alternativ einschaltbaren zweiten Zündstromunterbrechers in Abhängigkeit von der Getriebeübersetzung, der Fahrzeuggeschwindigkeit, der Motordrehzahl und/oder einem Unterdruck in einer Gemischversorgungsleitung eine definierte Spätverstellung des Zündzeitpunkts vorzunehmen.

Der Erfindung liegt die Aufgabe zugrunde, mit einfachen Mitteln eine Zündanlage zu schaffen, die eine gezielte und der Klingelgrenze eng angepaßte Verstellung des Zündzeitpunkts in dem Bereich der Klingelgrenze.

Diese Aufgabe wird durch die Gesamtheit der Merkmale des Patentanspruchs 1 in überraschend einfacher Weise gelöst.

Durch die Erfindung wird es möglich, mit schaltungstechnisch einfachen Mitteln gerade im Bereich der Vollast die Klingelgrenze zu umfahren und damit im gesamten Drehzahlbereich der Brennkraftmaschine einen Zündzeitpunkt einzustellen, bei dem ohne innere Beschädigung der Brennkraftmaschine eine maximale Ausnutzung ihrer Leistung erreicht wird.

Weiterbildungen und vorteilhafte Ausgestaltungen der Erfindung, insbesondere in Form von elektrischen Schaltungsmaßnahmen für die Durchführung beinhalten die weiteren Ansprüche 2 bis 5.

In der Zeichnung sind mehrere Ausführungsbeispiele der Erfindung und jeweils anhand von Diagrammen die zugehörigen Verstellfunktionen dargestellt. Es zeigt

Fig. 1 die zum Teil als Blockschaltbild dargestellte elektrische Schaltung einer teilelektronischen Zündanlage für eine 6-Zylinder-Brennkraftmaschine,

Fig. 2 das Diagramm der Zündverstellkurve über der Drehzahl der Maschine zur Schaltung nach Fig. 1,

Fig. 3 einen Teil der Schaltung gemäß Fig. 1 mit Halbleiter-Schaltelementen,

Fig. 4 das Diagramm der Zündverstellkurve über der Drehzahl zu Fig. 3,

Fig. 5 eine weitere Abwandlung des Schaltunsteiles entsprechend Fig. 3,

Fig. 6 das Diagramm der Zündverstellkurve über der Drehzahl zur Schaltung nach Fig. 5 und

Fig. 7 das Diagramm der Zündverstellkurve über der Drehzahl zu einer in Fig. 5 vorgesehenen Schaltungsergänzung.

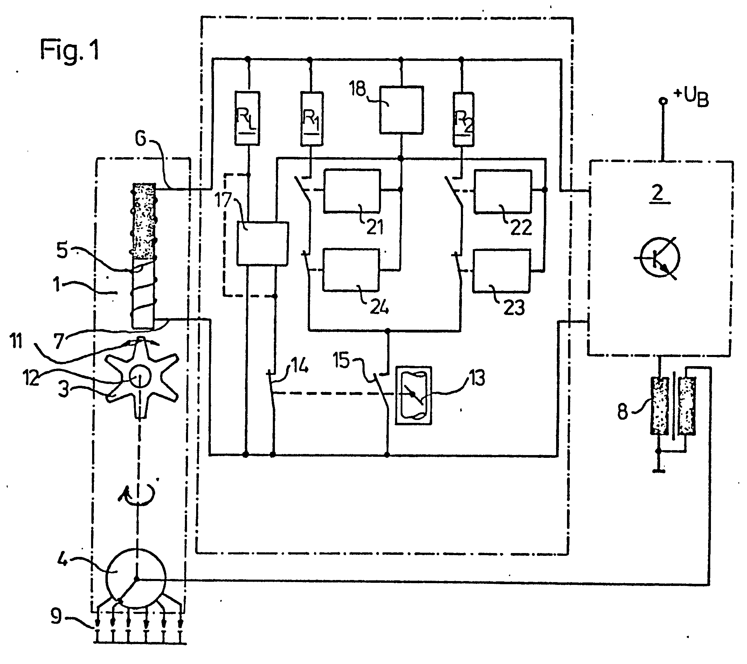

Die Schaltung der Zündanlage gemäß Fig. 1 weist einen induktiven Geber 1 auf, der ein übliches Zündsteuer-Gerät 2 mit Zündungsimpulsen ansteuert. Der Geber 1 besteht im wesentlichen aus einem sternförmigen Impulsrad 3, das zusammen mit einem Hochspannungs-Zündverteiler 4 von der Maschine in nicht dargestellter Weise entsprechend den den sechs Zylindern zugeordneten Zündimpulsen mechanisch angetrieben ist, und aus einer induktiven Spule 5, deren Anschlußleitungen 6 und 7 mit dem Zündsteuer-Gerät 2 verbunden sind. Das Zündsteuer-Gerät 2 steht über eine Zündspule 8 mit dem Eingang des Zündverteilers 4 in Verbindung, der den von der Zündspule hochgespannten Zündstrom auf die Zündkerzen 9 verteilt.

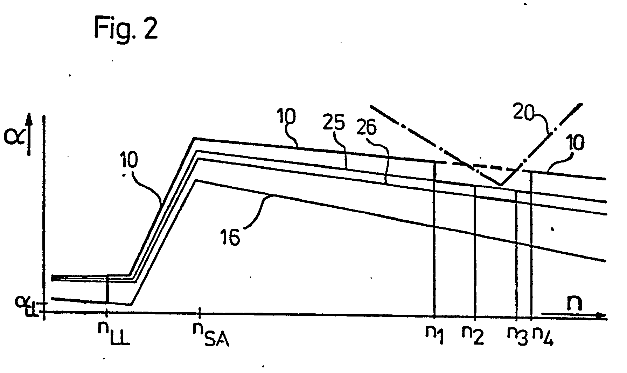

Um einen den jeweiligen Erfordernissen der Maschine entsprechenden Zündzeitpunkt nach der in Fig. 2 dargestellten Zündverstellkurve 10 zu erreichen, ist einerseits das Impulsrad 3 des induktiven Gebers 1 mittels einer üblichen nicht dargestellten Fliehkraftverstellung gemäß den Pfeilen 11 relativ zu einer Antriebswelle 12 in Drehrichtung vor- und rückverstellbar. Durch diese mechanische Verstellvorrichtung ergibt sich ein üblicher Verlauf einer Zündverstellkurve 10, die im Bereich der Leerlaufdrehzahl $n_L$ einen Zündzeitpunkt mit einem Zündwinkel $\alpha$ geringen Wertes und damit nahe dem oberen Totpunkt OT der Kolben der Maschine entspricht. In einem über der Leerlaufdrehzahl $n_L$ liegenden Bereich der Drehzahl n verstellt sich der Zündzeitpunkt nach »früh«, so daß die Zündung um einen bestimmten größeren Zündwinkel $\alpha$ vor OT erfolgt. Diese Frühverstellung nimmt nach Erreichen ihres Höchstwertes aufgrund einer im induktiven Geber 1 auftretenden Ankerrückwirkung bei weiterer Drehzahlsteigerung und damit Steigung der Geberspannung wieder stetig und geringfügig ab.

Zwischen den Anschlußleitungen 6 und 7 des Gebers 1 am Zündsteuer-Gerät 2 sind als Impedanz zur zusätzlichen Belastung des Stromkreises des Gebers 1 Widerstände $R_L$, $R_1$ und $R_2$ geschaltet, die je nach Ein- und Ausschaltstellung mehrerer Steuerschalter den Stromkreis des induktiven Gebers 1 zusätzlich belasten und damit ebenfalls eine Verringerung des Zündverstellwinkels bewirken. Zu diesem Zweck sind mit der Betätigung einer Drosselklappe 13 der Maschine verbundene Leerlauf-Schalter 14 und Vollast-Schalter 15 dem Widerstand $R_L$ einerseits und den Widerständen $R_1$ und $R_2$ andererseits zugeordnet. Der Leerlauf-Schalter 14 ist bei geschlossener Drosselklappe 13 ebenfalls geschlossen und legt damit den Widerstand $R_L$ entsprechend der gestrichelt dargestellten Leitung in die Verbindung zwischen den Anschlußleitungen 6 und 7 des Gebers 1 an das Zündsteuer-Gerät 2. Der Zündwinkel $\alpha$ wird dadurch bei Leerlauf-Betrieb der Maschine um einen zusätzlichen Betrag nach »spät« verstellt. Dadurch ergibt sich der in Fig. 2 dargestellte Zündwinkel $\alpha_L$, entsprechend der nach »spät« verlegten Zündverstellkurve 16. Diese Spätverstellung tritt zwar auch über der Leerlauf-Drehzahl $N_L$ ein, jedoch ist dies bei geschlossener Drosselklappe und damit im Schubbetrieb der Maschine vor allem dann ohne Nachteil, wenn die Kraftstoffversorgung der Maschine eine Schubabschaltung aufweist, die etwa über einer Drehzahl $n_S$ wirksam ist.

In Fig. 2 ist im oberen Bereich der Drehzahl n ein Einbruch der Klingelgrenze 20 der Maschine dargestellt. Diese Klingelgrenze 20 überschneidet sich mit der Zündverstellkurve 10, so daß in diesem Bereich der Drehzahl n ein für die Maschine schädliches Selbstzünden im Vollastbereich eintreten kann. Um ein nachteiliges Zurücknehmen des Zündwinkels $\alpha$ auf einen über den gesamten Bereich der Drehzahl n niedrigeren Verlauf entsprechend der Zündverstellkurve 16 und damit einen Verzicht auf entsprechend höhere Werte des Drehmomentes und der Leistung außerhalb des Selbstzündbereiches zu vermeiden, sind gemäß Fig. 1 bei geschlossenem Vollast-Schalter 15 Widerstände $R_1$ und $R_2$ über Drehzahlschalter 21, 22, 23 und 24 bei den Drehzahlen $n_1$, $n_2$, $n_3$ und $n_4$ zwischen die Anschlußleitungen 6 und 7 ein- und ausschaltbar. Dies erfolgt in der Weise, daß bei Annäherung der Zündverstellkurve 10 an die Klingelgrenze 20 bei einer Drehzahl $n_1$ der vom Signalwandler 18 angesteuerte Drehzahlschalter 21 schließt und den Widerstand $R_1$ über den bei Vollast ebenfalls geschlossenen Vollast-Schalter 15 zwischen die Anschlußleitungen 6 und 7 als zusätzliche Belastung des Gebers 1 einschaltet. Damit fällt der Zündwinkel $\alpha$ von der Zündverstellkurve 10 auf die Zündverstellkurve 25 ab. Der Zündwinkel $\alpha$ verbleibt dadurch in einem ausreichenden Abstand von dem Wert, bei dem gemäß der Klingelgrenze 20 bei Vollast Selbstzündung eintreten würde.

Unter der Annahme, daß sich auch die Zündverstellkurve 25 der Klingelgrenze 20 bei der Drehzahl $n_2$ erneut zu eng annähern würde, ist der gleichfalls vom Signalwandler 18 angesteuerte weitere Drehzahlschalter 22 vorgesehen, der den Widerstand $R_2$ parallel zum Widerstand $R_1$ als weitere Belastung des Gebers 1 über den Vollast-Schalter 15 zwischen die Anschlußleitungen 6 und 7 des Gebers 1 schaltet und eine weitere Verringerung des Zündwinkels $\alpha$ auf die Zündverstellkurve 26 bewirkt. Diese Zündverstellkurve 26 hält einen ausreichenden Abstand vom niedrigsten Wert der Klingelgrenze 20.

Bei einem Wiederanstieg der Klingelgrenze 20 im Bereich der Drehzahlen $n_3$ und $n_4$ steuert der Signalwandler 18 die Drehzahlschalter 23 und 24 an, die die Widerstände $R_1$ und $R_2$ durch Unterbrechen ihrer Verbindungsleitungen mit dem Vollast-Schalter 15 aus der Verbindung zwischen den Anschlußleitungen 6 und 7 trennen. Damit steigt der Zündwinkel $\alpha$ bei der Drehzahl $n_3$ wieder auf die Zündverstellkurve 25 und bei der Drehzahl $n_4$ auf die Zündverstellkurve 10 an. Dadurch wird gewährleistet, daß im Bereich der Höchstdrehzahl der Maschine, in dem die Klingelgrenze 20 wieder einen ausreichenden Abstand zur Zündverstellkurve 10 aufweist, das Drehmoment und die Leistung der Maschine voll genutzt werden können. Eine Absenkung des Zündwinkels $\alpha$ auf die Zündverstellkurve 26 über den ganzen Drehzahlbereich ist somit nicht erforderlich, so daß Einbußen an Höchstleistung der Maschine vermieden sind.

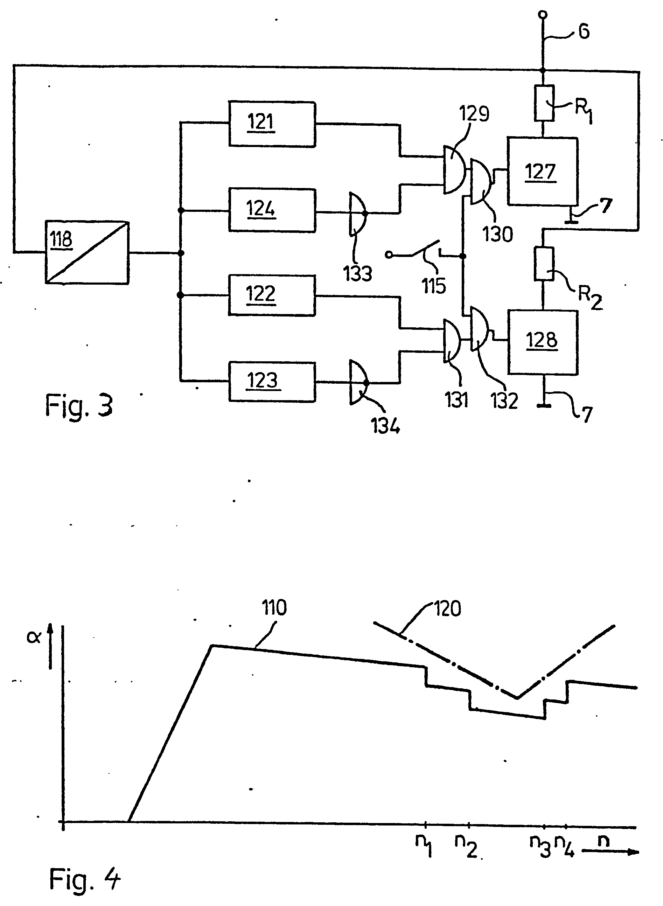

Der in Fig. 3 gezeigte Schaltungsteil enthält entsprechend Fig. 1 einen Signalwandler 118 und

zwei Widerstände $R_1$ und $R_2$, die gemeinsam an der Anschlußleitung 6 zur hier nicht dargestellten Zündungs-Steuerstufe 2 anliegen. Den Widerständen $R_1$ und $R_2$ sind elektronische Endstufen 127 bzw. 128 nachgeschaltet. Diese werden von Schwellwertschaltern 121, 122, 123 und 124 entsprechend der Motordrehzahlen $n_1$, $n_2$, $n_3$ und $n_4$ paarweise über je zwei UND-Gatter 129 und 130 bzw. 131 und 132 angesteuert. In den Verbindungsleitungen zwischen den Schwellwertschaltern 123 und 124 einerseits und den UND-Gattern 129 und 130 andererseits liegt je ein Inverter 133 und 134 zur Umkehrung des Spannungssignals für die Ansteuerung der UND-Gatter 129 und 131. Die UND-Gatter 130 und 132 liegen mit einem ihrer Eingänge jeweils einerseits am Ausgang der UND-Gatter 129 und 131 und mit ihrem zweiten Eingang jeweils an einem Vollast-Schalter 115. Deren Ausgang ist mit dem Eingang der Steuerstufen 127 bzw. 128 verbunden.

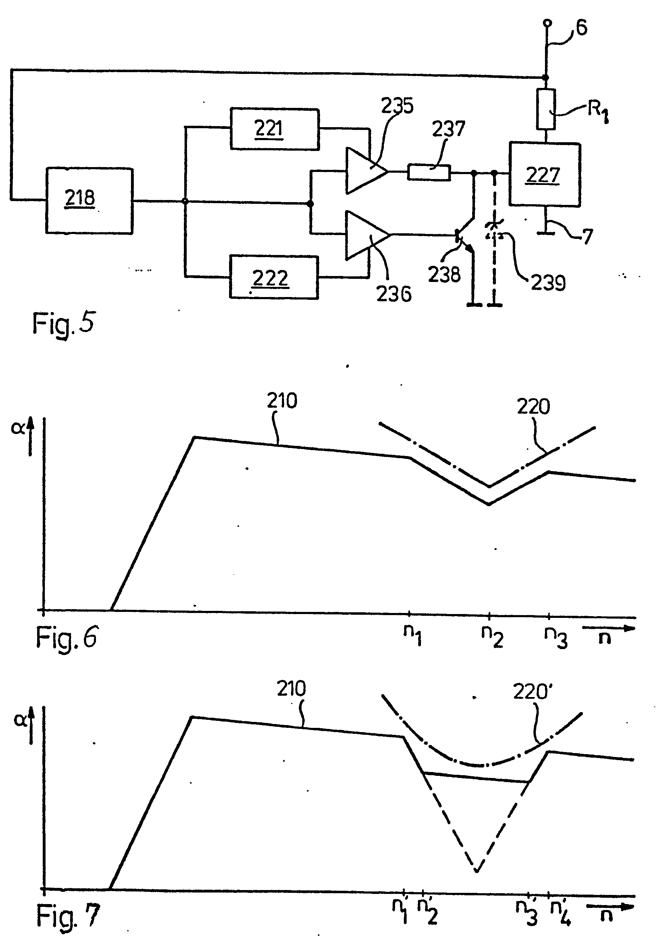

Wie Fig. 4 zeigt, entspricht die Funktion der Schaltung nach Fig. 3 dem entsprechenden Schaltungsteil nach Fig. 1. Bei Vollast der Maschine und damit geschlossenem Vollast-Schalter 115 gibt nach Erreichen der Drehzahl $n_1$ der Ausgang des Schwellwertschalters 121 ein »High«-Pegel auf das UND-Gatter 129. Der Ausgang des zweiten Schwellwertschalters 124 gibt dagegen bis zum Erreichen der höheren Drehzahl $n_4$ »Low«-Pegel auf den Inverter 133, der diesen in »High«-Pegel umwandelt und dem zweiten Eingang des UND-Gatters 129 zuleitet, so daß dieses das nachgeschaltete UND-Gatter 130 zusammen mit dem »High«-Pegel aus dem geschlossenem Vollast-Schalter 115 durchschaltet und über die Endstufe 127 den Widerstand $R_1$ an Masse legt. Der Widerstand $R_1$ liegt somit ab Überschreiten der Drehzahl $n_1$ an der Anschlußleitung 6 und damit als Belastung am Geber 1 gemäß Fig. 1, wodurch sich gemäß Fig. 4 ein Absenken des Zündwinkels $\alpha$ vor einer zu engen Annäherung der Zündverstellkurve 110 an die Klingelgrenze 120 ergibt.

Bei Erreichen der Drehzahl $n_2$ wird der Widerstand $R_2$ durch die Schwellwertschalter 122 und 123, den Inverter 134, die UND-Gatter 131 und 132, den Vollast-Schalter 115 und die Endstufe 128 in gleicher Weise dem Geber 1 zugeschaltet, wie der Widerstand $R_1$ bei der Drehzahl $n_1$. Dabei ergibt sich ein weiteres Zurückstellen der Zündverstellkurve 110 um einen weiteren Wert des Zündwinkels $\alpha$.

Bei weiterer Vollast des Motors und damit weiterhin geschlossenem Vollast-Schalter 115 sowie weiter steigender Drehzahl n über den Wert $n_3$ wird bei der Drehzahl $n_3$ der Schwellwertschalter 123 ausgelöst, so daß der »High«-Pegel an seinem Ausgang durch den Inverter 134 in einen »Low«-Pegel umgesetzt und dem UND-Gatter 131 zugeleitet wird, das dadurch sperrt. Dessen Ausgang bewirkt auch die Sperre des UND-Gatters 132, so daß wiederum dessen Ausgang die Endstufe 128 sperrt und damit der Anschluß des Widerstandes $R_2$ und dessen Belastung für den Geber 1 unterbrochen wird. Damit wird der Zündzeitpunkt $\alpha$ bei der Drehzahl $n_3$ entsprechend dem Anstieg der Klingelgrenze 120 wieder etwas in Richtung eines größeren Frühzündungswertes verstellt. Der gleiche Schaltvorgang wiederholt sich bei Erreichen der Drehzahl $n_4$ durch Ansprechen des Schwellwertschalters 124 und der nachgeschalteten Schaltelemente 133, 129, 130 und 127. Dadurch wird auch die Belastung des Gebers 1 durch den Widerstand $R_1$ aufgehoben und der Zündwinkel $\alpha$ wieder auf den normalen Verlauf der Zündverstellkurve 110 gemäß Fig. 4 zurückgestellt. Diese Rückstellung des Zündwinkels $\alpha$ erfolgt bei Entlastung der Maschine durch Öffnen des Vollast-Schalters 115 stets auch innerhalb des Bereiches zwischen den Drehzahlen $n_1$ und $n_4$, wodurch der Zündwinkelbedarf bei Teillast ohne Klingelneigung voll ausgenutzt werden kann.

In Fig. 5 ist der Schaltungsteil entsprechend Fig. 3 weiter abgewandelt. Dem Signalwandler 218 sind hierbei nur zwei Schwellwertschalter 221 und 222 nachgeschaltet. Deren Ausgänge liegen an den Stromversorgungsanschlüssen je eines Verstärkers 235 und 236, deren Eingänge mit dem Signalwandler 218 verbunden sind und deren Ausgänge einerseits über einen Widerstand 237 am Steuereingang einer elektronischen Endstufe 227 liegt und die Verbindung eines Widerstandes $R_1$ nach Masse herstellt. Der Ausgang des zweiten Verstärkers 236 liegt an der Basis eines Transistors 238, dessen Kollektor-Emitter-Strecke eine Verbindung des Steuereinganges der Endstufe 227 nach Masse bildet. Alternativ ist am genannten Steuereingang der Endstufe 227 die Kathode einer Zenerdiode 239 angeschlossen, deren Anode an Masse liegt.

Wie in Fig. 6 dargestellt, ergibt die Schaltung gemäß Fig. 5 durch stetige Rücknahme des Zündwinkels $\alpha$ ab der Drehzahl $n_1$ bis zur Drehzahl $n_2$ bis zur Drehzahl $n_3$ eine engere Anpassung des Zündwinkels $\alpha$ an einen Einbruch der Klingelgrenze 220 im Bereich dieser Drehzahlen. Dies wird bei dieser Schaltung dadurch erreicht, daß der Verstärker 235 bei ansteigendem Wert des Signals aus dem Signalwandler 218 nach Freigabe durch den Schwellwertschalter 221 bei der Drehzahl $n_1$ über den Widerstand 237 die Endstufe 227 stufenlos ansteuert und damit den Widerstand $R_1$ stufenlos als Belastung dem Geber 1 nach Figur aufschaltet. Bei Erreichen der Drehzahl $n_2$ steuert der Verstärker 236 nach Freigabe durch den Schwellwertschalter 222 den Transistor 238 gleichfalls stufenlos an den Eingang der Endstufe 227, wodurch das Eingangssignal der Endstufe 227 zunehmend nach Masse abgeleitet wird und die Endstufe 227 gleichfalls stufenlos die Abschaltung des Widerstandes $R_1$ bis zum Erreichen der Werte der Zündverstellkurve 210 wieder aufhebt. Dadurch ergeben sich für den Zündwinkel $\alpha$ stufenlose Verstellwerte, die dem Verlauf der Klingelgrenze 220 eng angepaßt werden können.

Durch zusätzliches Einbeziehen der Zenerdiode 239 in den Schaltungsteil nach Fig. 5 wird

gemäß Fig. 7 erreicht, daß nach Erreichen des Schaltwertes der Zenerdiode 239 die Steuerspannung für die Endstufe 227 konstant gehalten wird. Damit bleibt von der Drehzahl $n_2'$ an auch die Rücknahme des Zündwinkels $\alpha$ bis zum Beginn der Funktion des Transistors 238 bei der Drehzahl $n_3'$ konstant. Bei weiterem Ansteigen der Drehzahl n von $n_3'$ nach $n_4'$ stellt sich der Zündwinkel $\alpha$ wiederum auf die Werte nach der Zündverstellkurve 210 ein. Diese Ausbildung des Schaltungsteiles ermöglicht eine enge Anpassung der Zündverstellkurve 210 an einen breiten Einbruch der Klingelgrenze 220'.

Alle Schaltungsvarianten der Erfindung bieten die Möglichkeit, mit geringem Aufwand eine Zündverstellkurve oder auch ein Zündkennfeld einer teilelektronischen bzw. einer vollelektronischen Zündschaltung in beliebigen Drehzahl- und Lastbereichen von Brennkraftmaschinen in Abhängigkeit von verschiedenen Parametern einem besonderen Bedarf eines verringerten Frühzündungswertes eng anzupassen.

## Patentansprüche

1. Zündanlage für Brennkraftmaschinen,

— mit einem induktiven Geber für die Zündzeitpunkt-Steuerung des Primärstromkreises einer Zündspule,
— wobei die Phasenlage des Gebersignals und damit der Zündzeitpunkt durch eine Impedanz veränderbar ist,
— die als zusätzliche Belastung dem Geber bei überschreiten eines ersten Drehzahlwerts im Vollastbetrieb der Maschine zuschaltbar und bei Unterschreiten dieses Drehzahlwerts wieder abschaltbar ist,
— wobei die Impedanz (Widerstand $R_L$, $R_1$ und $R_2$) dann bei Überschreiten eines zweiten, höheren Drehzahlwerts ($n_3$ bzw. $n_4$) wieder abschaltbar und bei Unterschreiten dieses zweiten Drehzahlwerts wieder zuschaltbar ist, und
— wobei die beiden Drehzahlwerte ($n_1$ und $n_4$ bzw. $n_1$ und $n_3$) durch die Klingelgrenze der Maschine bestimmt sind,
— wobei ferner der Wert der Impedanz innerhalb des durch die beiden Drehzahlwerte gebildeten Einschaltbereiches, veränderbar ist und
— wobei die Änderung des Wertes der Impedanz von der Drehzahl abhängig ist.

2. Zündanlage nach Anspruch 1, dadurch gekennzeichnet,

— daß mehrere Impedanzen (Widerstände $R_1$ und $R_2$) bei steigender Drehzahl (n) der Maschine nacheinander und parallel zueinander dem Geber (1) zu- und von diesem wieder abschaltbar sind.

3. Zündanlage nach Anspruch 1, dadurch gekennzeichnet,

— daß die Impedanz (Widerstand $R_1$) bei steigender Drehzahl (n) der Maschine mittels eines analogen elektronischen Steuerelements (Verstärker 235 und Endstufe 227) mit stufenlos abnehmenden Widerstandswert dem Geber (1) zuschaltbar ist und
— und bei weiter steigender Drehzahl (n) mit stufenlos steigendem Widerstandswert eines weiteren elektronischen Steuerelements (Verstärker 236) wieder vom Geber (1) abschaltbar ist.

4. Zündanlage nach Anspruch 1, dadurch gekennzeichnet, daß

— die Impedanz mittels eines ersten Schwellwertschalters (121) über eine elektronische Steuerstufe zuschaltbar ist,
— daß ein weiterer Schwellwertschalter (124) dem ersten Schwellwertschalter (121) eingangsseitig parallel geschaltet ist,
— der bei einer höheren Drehzahl ($n_4$) der Maschine als der erste Schwellwertschalter (121) auslösbar ist,
— daß beide Schwellwertschalter (121 und 124) über die beiden Eingänge eines UND-Gatters (129) mit der elektronischen Steuerstufe (127) verbunden sind und
— daß zwischen dem zweiten Schwellwertschalter (12) und dessen Anschluß am UND-Gatter (129) ein Inverter (133) liegt.

5. Zündanlage nach Anspruch 4, dadurch gekennzeichnet,

— daß mehreren Impedanzen (Widerstände $R_1$ und $R_2$) je zwei parallele Schwellwertschalter (121 und 124 bzw. 122 und 123) über je eine elektronische Steuerstufe (127 und 128), je ein UND-Gatter (129 und 131) und je einen Inverter (133 und 134) zugeordnet sind.

## Claims

1. An ignition system for internal-combustion engines,

— with an inductive transmitter for controlling the ignition point of the primary circuit of an ignition coil,
— wherein the phase relationship of the transmitter signal and therefore of the ignition point can be varied by an impedor,
— which, as an additional load, can be switched to the transmitter when a first speed of revolution is exceeded with the engine under full load and can be switched off again when this speed of revolution is not reached,
— and the impedor (resistor $R_L$, $R_1$ and $R_2$) can then be switched off again when a second, higher speed of revolution ($n_3$; $n_4$) is ex-

ceeded and can be switched on again when this second speed of revolution ist not reached, and

— the two speeds of revolution ($n_1$ and $n_4$; $n_1$ and $n_3$) being determined by the knock limit of the engine,
— and furthermore the impedance being variable within the switch-in range formed by the two speeds of revolution, and
— the change in the impedance value being dependent upon the speed.

2. An ignition system according to Claim 1, characterized in

— that a plurality of impedors (resistors $R_1$ and $R_2$) can be successively and in parallel connected to the transmitter (1) and disconnected therefrom again as the speed (n) of the engine increases.

3. An ignition system according to Claim 1, characterized in

— that when the speed (n) of the engine increases, the impedor (resistor $R_1$) can be connected to the transmitter (1) be means of an analogue electronic control element (amplifier 235 and final stage 227) having a continuously decreasing resistance and
— as the speed (n) further increases and with continuous increase in resistance of a further electronic control element (amplifier 236), the impedor can be disconnected again from the transmitter (1).

4. An ignition system according to Claim 1, characterized in

— that the impedor can be connected by means of a first threshold-value switch (121) by way of an electronic control stage,
— that a further threshold-value switch (124) is connected at the input side and in parallel to the first threshold-value switch (121),
— which further threshold-value switch can be tripped as the first threshold-value switch (121),
— that both threshold-value switches (121 and 124) are connected to the electronic control stage (127) through the two inputs of an AND gate (129) and
— that an inverter (133) is disposed between the second threshold-value switch (124) and its connection to the AND gate (129).

5. An ignition system according to Claim 4, characterized in

— that two parallel threshold-value switches (121 and 124; 122 and 123 respectively) are associated with each of a plurality of impedors (resistors $R_1$ and $R_2$) by way of an electronic control stage (127 and 128 respectively), an AND gate (129 and 131 respectively) and an inverter (133 and 134 respectively).

**Revendications**

1. Dispositif d'allumage pour moteurs à combustion interne,

— avec un émetteur inductif pour la commande de l'instant d'allumage du circuit de courant primaire d'une bobine d'allumage,
— la position de phases du signal de l'émetteur, et donc l'instant d'allumage étant susceptible d'être modifiée par une impédance,

dispositif caractérisé en ce que:

— l'impédance est susceptible d'être commutée sur l'émetteur à titre de charge supplémentaire lors du dépassement d'une première valeur ($n_1$) de la vitesse de rotation lorsque le moteur fonctionne en pleine charge, et elle est susceptible d'être à nouveau déconnectée lors du franchissement vers le bas de cette valeur de la vitesse de rotation,
— l'impédance (résistances $R_L$, $R_1$ et $R_2$) étant ensuite susceptible d'être déconnectée à nouveau lors du dépassement d'une seconde valeur plus élevée ($n_3$ ou bien $n_4$) de la vitesse de rotation et étant susceptible d'être à nouveau connectée lors du franchissement vers le bas de cette seconde valeur de la vitesse de rotation,
— les deux valeurs ($n_1$ et $n_4$ ou bien $n_1$ et $n_3$) de la vitesse de rotation étant déterminées par la limite de cliquettement du moteur,
— la valeur de l'impédance étant en outre susceptible d'être modifiée à l'intérieur de la zone de connexion délimitée par les deux valeurs de la vitesse de rotation,
— la modification de la valeur de l'impédance dépendant de la vitesse de rotation.

2. Dispositif d'allumage selon la revendication 1, caractérisé en ce que:

— plusieurs impédances (résistances $R_1$ et $R_2$) sont susceptibles d'être connectées à l'émetteur (1) et à nouveau déconnectées de celui-ci, l'une après l'autre et en parallèle entre elles, lorsque la vitesse de rotation (n) du moteur croît.

3. Dispositif d'allumage selon la revendication 1, caractérisé en ce que:

— l'impédance (résistance $R_1$), lorsque la vitesse de rotation (n) du moteur augmente, est susceptible d'être connectée à l'émetteur (1) avec une valeur de résistances décroissant de façon continue, au moyen d'un élément électronique de commande analogique (amplificateur 235 et étage terminal 227)

— et lorsque la vitesse de rotation (n) continue à croître l'impédance est susceptible d'être déconnectée à nouveau de l'émetteur (1) avec une valeur croissante de façon continue de la résistance d'un autre élément électronique de commande (amplificateur 236).

4. Dispositif d'allumage selon la revendication 1, caractérisé en ce que:

— l'impédance est susceptible d'être connectée au moyen d'un premier commutateur à valeur de seuil (121) par l'intermédiaire d'un étage électronique de commande,
— un autre commutateur à valeur de seuil (124) est branché en parallèle côté entrée sur le premier commutateur à valeur de seuil (121)
— ce second commutateur à valeur de seuil (124) étant susceptible d'être déclenché pour une vitesse de rotation ($n_4$) du moteur plus élevée que le premier commutateur à valeur de seuil (121),
— les deux commutateurs à valeur de seuil (121 et 124) sont reliés à l'étage électronique de commande (127) par l'intermédiaire des deux entrées d'une porte ET (129),
— un inverseur étant placé entre le second commutateur à valeur de seuil (12) et son raccordement à la porte ET (129).

5. Dispositif d'allumage selon la revendication 4, caractérisé en ce que:

— à plusieurs impédances (résistances $R_1$ et $R_2$) sont respectivement associés deux commutateurs à valeur de seuil en parallèle (121 et 124 ou bien 122 et 123) par l'intermédiaire respectivement d'un étage électronique de commande (127 et 128), respectivement d'une porte ET (129 et 131) et respectivement d'un inverseur (133 et 134).

Fig. 1

$+U_B$

$R_L$  $R_1$  18  $R_2$

17

2

21  22

24  23

14  15  13

8

9

0 045 903

Fig. 2

Fig. 3

Fig. 4

Fig.5

Fig.6

Fig.7